# EUROPEAN PATENT APPLICATION

(11) **EP 4 696 569 A1**
(43) Date of publication of application: **18.02.2026**
(21) Application number: 24759814.7
(22) Date of filing: 20.02.2024
(51) Int. Cl.: B60T 13/74, H02P 3/04, H02P 3/02

(54) **BRAKING DEVICE FOR AN ELECTRIC MOTOR**

(30) Priority: 21.02.2023 ES 202330264 U
(71) Applicant: Tecnimusa S.L., 30320 Fuente Alamo (ES)
(72) Inventor: GARCÍA GARCÍA, Francisco Javier, 30320 FUENTE ALAMO (ES); AVILA FERNANDEZ, Alejandro, 30320 FUENTE ALAMO (ES)
(74) Representative: Díaz Pacheco, Maria Desamparados
(86) International application number: PCT/ES2024/070095
(87) International publication number: WO 2024/175818

(57) **Abstract**

The invention relates to a braking device for an electric motor that can be used to lock the rotation of its shaft on a disc or an extension thereof as a rotary mobile part with respect to a fixed part. The device is characterised in that it comprises
- an elastic element,
- a solenoid provided with a piston that when activated, given that it has voltage, pulls or pushes said piston, and
- a braking element, connected to the piston of the solenoid and to the elastic element, that is displaced until it comes into contact the mobile part in order to unlock the rotation thereof or not, based on the activation of the solenoid or not, respectively.

## Description

### OBJECT OF THE INVENTION

As expressed by the title of the present specification, the invention relates to a braking device for an electric motor that provides the advantages and features described below to the function for which it is intended, representing an improvement over the current state of the art.

The object of the present invention relates to a braking device for an electric motor of the type that acts with or without voltage to decelerate the inertia of the motor and maintain the load without voltage when it is stopped, which is essentially distinguished by having a configuration that, although not necessarily, allows it to be implemented so that it acts on the side of the motor instead of at the rear part as is usually the case with other systems, thereby allowing the length of the assembly to be reduced, being able to be incorporated or not into the gearbox itself, thus minimising the dimensions of the motor. Furthermore, the device preferably also comprises an emergency unlocking system which may be with a parallel and/or manual electrical system.

### FIELD OF APPLICATION OF THE INVENTION

The field of application of the present invention is comprised within the sector of the industry dedicated to manufacturing braking systems, focusing particularly on the area of brake systems for electric motors.

### BACKGROUND OF THE INVENTION

The sleeves of spark plugs or collectors comprise regenerative liquid filters that use perlite, diatomaceous earth, or the like as a filtering medium.

Brakes for an electric motor are known to brake when there is no voltage to decelerate the inertia that the motor may carry or to maintain the load without voltage when it is stopped. However, these brakes are normally for being used at the rear part of electric motors.

The problem that the present invention intends to solve is therefore to reduce the length of the motor (depth), avoiding the need to implement the brake at the rear part, in addition to the fact that the dimensions of commercial brakes are very large for the newtons of force required to brake. Using a small brake that acts on one side instead of at the rear part would be beneficial.

Moreover, and in reference to the current state of the art, it should be noted that, at least to the applicant's knowledge, there is no other brake device for an electric motor with technical features identical or similar to those of the device claimed herein.

### DESCRIPTION OF THE INVENTION

The braking device for an electric motor proposed by the invention is configured as the ideal solution to the aforementioned objective, with the characterising details that make it possible and distinguish it being duly set out in the final claims attached to the present description.

Specifically, as noted above, the invention proposes a braking device for electric motors that blocks movement and maintains the load without electrical voltage, and in which electrical voltage is used to release the brake and allow movement. Thus, in the event of a power failure, for example in the event of an emergency stop, the system blocks movement and maintains the load.

Furthermore, in the preferred embodiment, the braking device can be unlocked manually and/or with a parallel electrical system, thereby releasing the actuation element and allowing movement.

Another advantageous feature of the braking device object of the present invention is that it takes up little space. The brake takes up much less space than conventional brake systems currently known on the market, reducing the space used by other brakes found for the braking torque that this brake performs by more or less half.

Moreover, the brake of the invention is suitable for being housed within the reduction system itself, so it does not add space to the rear part of the motor. The brake extends along one side of the geared motor, rather than extending rearward, lengthening the geared motor system.

It should be noted that although the brake device is designed to operate without voltage, it can optionally be implemented by reversing the operating method, i.e., instead of the brake acting when there is no voltage, it acts in the opposite way, i.e., the system is braked when there is voltage and unlocked when there is no voltage.

The brake is scalable, changing the size and other characteristics such as the power of the elements it comprises, and can be used for a wide range of rotary motors of different dimensions and torques.

Optionally, the device can be implemented in a motor without a reduction system, i.e., it does not necessarily have to have a reduction gear. In that case, it can be implemented using a very small space at the front part of the motor.

Likewise, it can also be implemented at the rear part of the motor, as is normally done, in which case it still has the advantage of being very small, with the necessary extension of the elements to the side and not to the rear part, reducing the length.

In the preferred embodiment, the device is provided to act on the front part, and not the rear part, of the motor. It is preferably implemented in the gearbox casing itself.

In any case, the main parts of the brake device of the invention are as follows:
- A locking system. This consists of an elastic element that stretches due to its very nature, exerting mechanical pressure, preferably a spring (although it can be any other element of this type, such as a spring, gas cylinder, hydraulic cylinder, etc.) that acts on a braking element, preferably consisting of one or two arcs with non-slip material that wrap around a disc anchored to the motor shaft or its extension, braking the movement of the motor shaft and maintaining the load when it is stopped without the need for voltage.
- An unlocking system. This system releases the pressure exerted by the elastic element of the locking system and consists of a solenoid. This system operates with electrical voltage which, when activated and by means of a plunger or lever system, compresses or pulls the spring or cylinder arranged in the locking system, releasing the motor shaft.

It should be noted that a "pull" solenoid is preferred, although a "push" solenoid can also be used, changing the location where the lever is.

A braking element: Preferably, this consists of one or two arcs provided with non-slip material, although it can also be a "belt" which, in either case, has the function of encircling the motor shaft or an extension thereof to brake it. The components described above (the system exerting pressure and the system releasing pressure) act on this element to complete the braking or brake release action. Optionally, a simple stop incorporated into the solenoid's own plunger can also act as a braking element, acting directly on the disc of the motor shaft or its extension with the displacement of said plunger, or acting in reverse when fixed to the plunger through a connecting rod. Preferably, the braking element is locked when the solenoid is not under voltage and unlocked when it is under voltage.

Additionally, in a preferred embodiment, the device further comprises an emergency release system, parallel to the aforementioned braking system, which releases the motor without the need for electricity in the solenoid, and is designed to release the motor and allow rapid movement in an emergency or when desired. To this end, two options are provided, which may be alternative or complementary:
A manual-mechanical system, preferably a handle which, when pressed by a hand, releases the action of the locking system, similar to what the electrical system itself (solenoid) does.

Furthermore, an electrical system parallel to the main system, with its own wiring, being able to be powered by the same system or by a different system, for example batteries or by means of connecting to the grid, and a push-button/switch which switches said solenoid or actuator on/off and unlocks the braking system.

### DESCRIPTION OF THE DRAWINGS

To complement the description being made and for the purpose of helping to better understand the features of the invention, drawings are attached to the present specification as an integral part thereof in which the following is depicted in an illustrative and non-limiting manner:

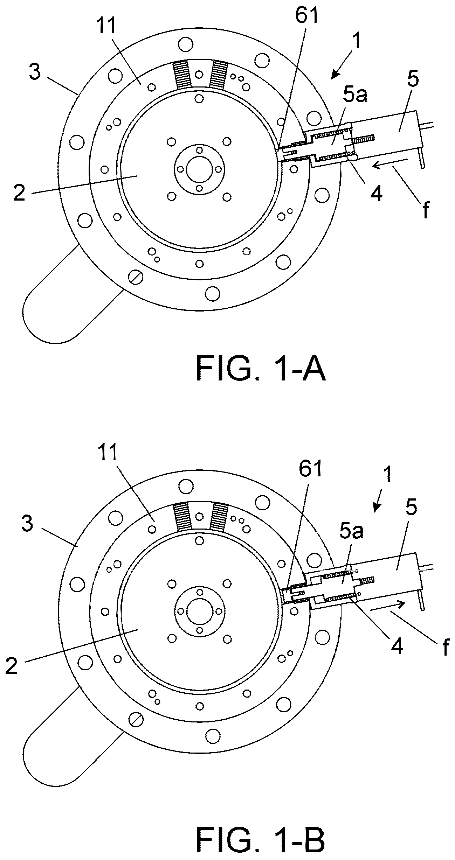

Figures 1-A and 1-B show respective schematic elevational views of an example of the braking device for an electric motor object of the invention in a variant thereof with a stop in the piston of the solenoid as a braking element and which activates braking when it is not under voltage, having been depicted, respectively, in a braking position with the solenoid at rest pushing the piston, and in an unlocking position with the solenoid activated pulling the piston;

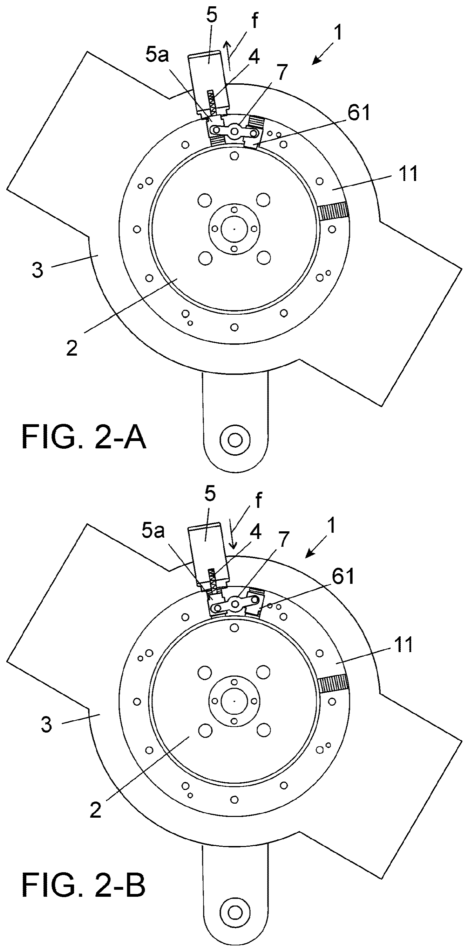

Figures 2-A and 2-B show respective schematic elevational views of another example of the braking device according to the invention in a variant thereof similar to the previous one but with reverse action, i.e., with a stop in the piston of the solenoid as a braking element and which activates braking by pulling the piston when it is not under voltage, having been depicted, respectively, in a braking position with the solenoid at rest pulling the piston, and in an unlocking position with the solenoid activated pushing the piston;

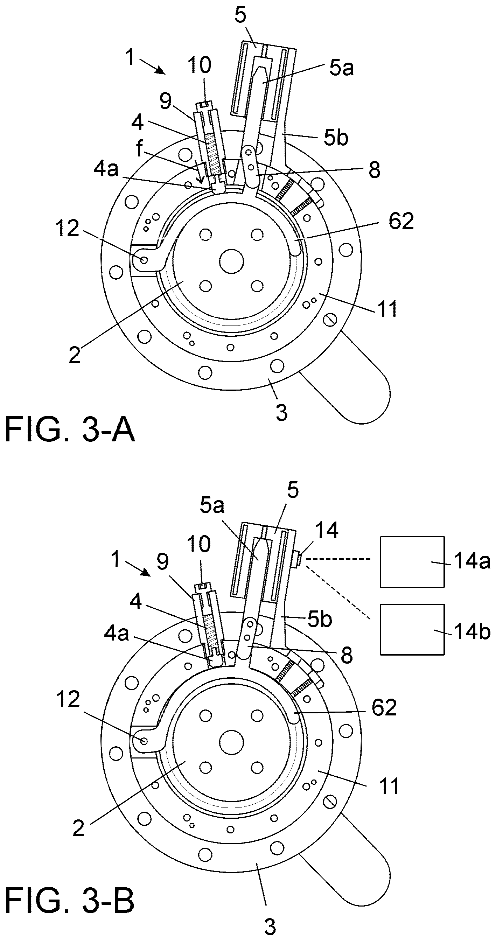

Figures 3-A and 3-B show respective schematic elevational views of another example of the braking device of the invention in a variant thereof with a force regulator and an arc as a braking element connected to the piston of the solenoid, having been depicted respectively in a braking position, with the solenoid at rest and not under voltage, and in the unlocked position, with the solenoid activated and under voltage, including in the case of Figure 3-B the option of a push-button switch for electrical emergency unlocking;

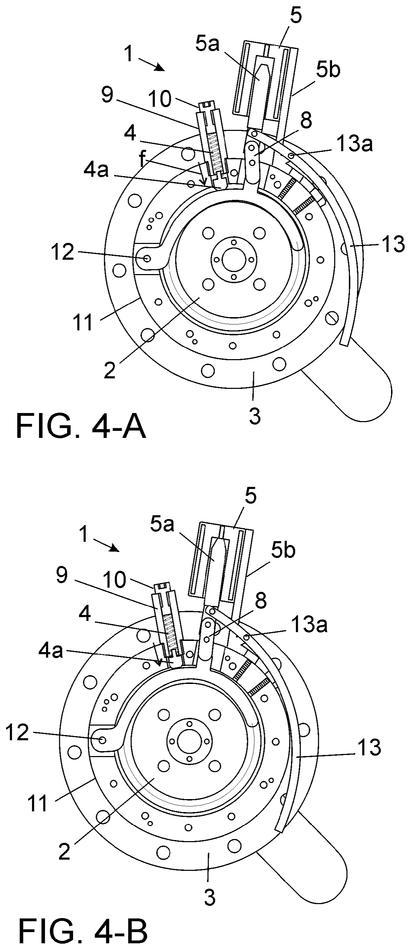

Figures 4-A and 4-B show respective schematic elevational views of another example of the braking device of the invention in a variant thereof similar to that shown in Figures 3-A, 3-B, with a force regulator and an arc as a braking element connected to the piston of the solenoid and further including a handle as a manual emergency unlocking system, having been depicted in a braking position and in the unlocked position, respectively; and

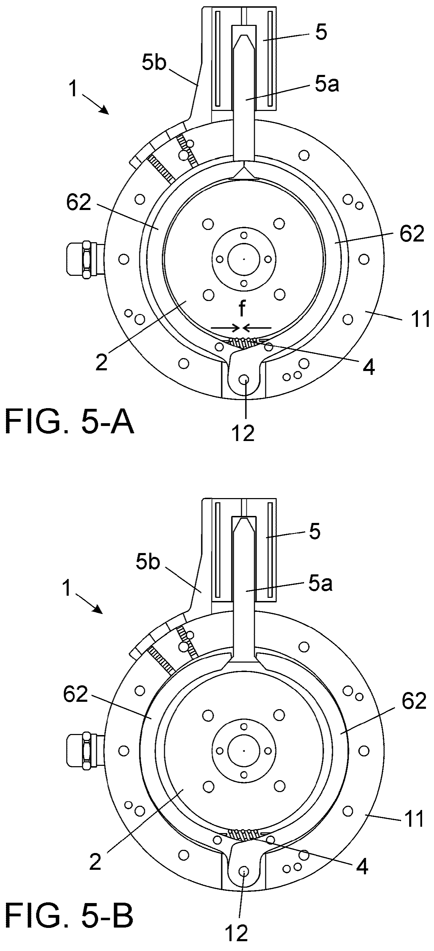

Figures 5-A and 5-B show respective schematic elevational views of another example of the braking device of the invention in a variant thereof with two articulated arcs as a braking element connected to the piston of the solenoid, having been depicted respectively in a braking position, with the solenoid at rest and not under voltage and in the unlocked position with the solenoid activated and under voltage.

### PREFERRED EMBODIMENT OF THE INVENTION

In view of the mentioned figures, and according to the number used, several non-limiting embodiments of the braking device for an electric motor of the invention, which comprises what is described in detail below, can be observed therein.

In that sense, as observed in said figures, the braking device (1) of the invention, that can be used to be implemented in an electric motor to lock the rotation of its shaft on a disc or an extension thereof as a rotary mobile part (2) with respect to a fixed part (3), is distinguished by comprising at least:
- an elastic element (4), such as a spring, cylinder, or the like,
- a solenoid (5) provided with a piston (5a) that when activated, given that it has voltage, pulls or pushes said piston (5a), and
- a braking element (61, 62), connected to the piston (5a) of the solenoid (5) and to the elastic element (4), that is displaced until it comes into contact with the mobile part (2) of the motor shaft to unlock the rotation thereof or not based on the activation or not of the solenoid (5), respectively, given that the system is locked passively, not under voltage.

Furthermore, the device (1) comprises a fixed body (11) in which the elastic element (4), the solenoid (5), and the braking element (61, 62) are incorporated, being attached, for example screwed, to the fixed part (3) of the motor. Preferably said fixed body (11) is a circular casing installed laterally on the motor, fixed to the fixed part (3) surrounding the mobile part (2), such that it does not increase the length of the motor, and to which the solenoid (5) and other elements of the device are radially coupled.

In one embodiment option, as shown in Figures 1-A and 1-B, the elastic element (4) is a spring integrated in the solenoid (5) and the braking element is a stop (61) incorporated directly at the end of the piston (5a) of the solenoid (5).

In said option, preferably, the (pull) solenoid (5) is installed such that when it is not under voltage, the expansion spring or elastic element (4) expands and exerts a pushing force on the piston (5a) which in turn is transmitted, through the braking stop (61), to the mobile part (2) of the motor, braking the rotation thereof (Figure 1-A), and when the solenoid (5) is under voltage, pulls the piston (5a), compressing the elastic element (4), releasing the braking stop (61), and accordingly, releasing the rotation of the mobile part (2) (Figure 1-B). The arrows (f) show the direction of the force exerted by the elastic element (4) in each case.

Considering Figures 2-A and 2-B, it can be seen how, in another embodiment option of the braking device, the braking stop (61) is connected to the piston (5a) of the (push) solenoid (5) through a connecting rod (7). In that sense, in this case the solenoid (5) works in the reverse manner, i.e., it is installed such that when it is not under voltage, the compression spring or elastic element (4) is compressed and pulls the piston (5a) which, through the connecting rod (7), converts the movement into a pushing movement on the braking stop (61) which in this case is incorporated separately from the piston (5a), such that it is displaced in the opposite direction with respect to the piston (5a) pressing on the mobile part (2) and braking the rotation thereof (Figure 2-A), and when the solenoid (5) is under voltage, it pushes the piston (5a), decompressing the elastic element (4) and in turn pushing the connecting rod (7), causing the displacement in the reverse direction of the braking stop (61) and, accordingly, releasing the rotation of the mobile part (2) (Figure 2-B).

Considering Figures 3-A and 3-B, it can be seen how, in another embodiment option, the braking element of the device consists of an approximately semicircular arc (62) incorporated such that it surrounds a portion of the mobile part (2), being connected to the piston (5a) of the solenoid (5) through an articulated part (8) such that, with the solenoid (5) at rest and not under voltage, the elastic element (4) is decompressed, exerting a pushing force on the arc (62) through a rubber pad (4a) (Figure 3-A), and with the solenoid (5) activated and under voltage, the piston (5a) pulls the braking arc (62) through the articulated part (8), releasing the mobile part (2) (Figure 3-B).

Preferably, the braking arc (62) is attached at one end thereof to the fixed body (11) by means of an articulated attachment or rotation shaft (12) and has at least on its internal face, the face that is in contact with the mobile part (2), a coating of non-slip material.

In this case, the elastic element (4) is preferably an expansion spring incorporated in a tubular body (9) attached to the fixed body (11), independently of the piston (5a) of the solenoid (5), and in which a force regulating screw (10) has been provided at its outer end, to regulate the force that said spring (4) exerts on the braking arc (62) and on which it applies pressure at the inner end or opposite end through a pressure part (4a) provided for that purpose at the internal end of the spring (4).

Furthermore, considering Figures 5-A and 5-B, it can be seen how, in another embodiment option, the braking element consists of two approximately semicircular arcs (62) incorporated symmetrically such that they surround the mobile part (2) on opposite sides. In this case, both arcs (62) are attached to the fixed body (11) at one end, on the side opposite the position of the solenoid (5), to the same rotation shaft (12), and attached to one another by means of an elastic element in the form of a compression spring (4), such that the force of said spring (4) determines the closing of the arcs (62) around the mobile part (2) and, accordingly, the braking thereof (Figure 5-A), and on the diametrically opposite side, they are connected to the piston (5a) of the solenoid (5) such that the displacement of said piston (5a) upon activating the voltage of the solenoid (5) causes the separation of both arcs (62) and, accordingly, the release of the mobile part (2) (Figure 5-B).

Additionally, the device further comprises emergency brake unlocking means (13, 14) which release the action of the braking element (61, 62) on the mobile part (2) without the need for voltage in the solenoid (5) or under voltage in the solenoid (5) from an electrical power source parallel to that which is originally used.

In one embodiment option, the emergency unlocking means consist of a mechanical-manual actuation mechanism (13). Preferably, as observed in Figures 4-A and 4-B, said mechanism consists of a handle (13) associated with the piston (5a) of the solenoid (5) at one end and with a point of the fixed body (11), for example in the support (5b) in which the solenoid (5) is fixed, in the form of a lever (13a) which, when pressed by a hand at the opposite end, releases the mobile part (2) from the action of the braking element (61, 62) caused on same by the elastic element (4).

In an alternative or complementary embodiment option, the emergency unlocking means, schematically depicted in Figure 3-B, consist of a push-button/switch (14), powered by an electrical system parallel to the main system by means of batteries (14a) and/or connection to the grid (14b) through the corresponding wiring, which is connected to the solenoid (5) so as to switch it on/off to unlock/lock the braking system.

Having sufficiently described the nature of the present invention, as well as how to put it into practice, it is not considered necessary to further explain same for one skilled in the art to understand its scope and the advantages derived from same.

## Claims

1. A braking device for an electric motor that can be used to lock the rotation of its shaft on a disc or an extension thereof as a rotary mobile part (2) with respect to a fixed part (3), the device being **characterised in that** it comprises
- an elastic element (4),
- a solenoid (5) provided with a piston (5a) that when activated, given that it has voltage, pulls or pushes said piston (5a), and
- a braking element (61, 62), connected to the piston (5a) of the solenoid (5) and to the elastic element (4), that is displaced until it comes into contact with the mobile part (2) in order to unlock the rotation thereof or not based on the activation of the solenoid (5) or not, respectively.

2. The braking device for an electric motor according to claim 1, **characterised in that** the elastic element (4) is a spring or a gas or hydraulic cylinder.

3. The braking device for an electric motor according to claim 1, **characterised in that** the elastic element (4) is associated with a force regulating element (10).

4. The braking device for an electric motor according to any of the preceding claims, **characterised in that** the braking element is a stop (61) connected to the piston (5a) of the solenoid (5) directly or through a connecting rod (7).

5. The braking device for an electric motor according to any of the preceding claims, **characterised in that** the braking element is at least one arc (62) having at least on its internal face, the face that is in contact with the mobile part (2), a coating of non-slip material.

6. The braking device for an electric motor according to any of the preceding claims, **characterised in that** it comprises a fixed body (11) in which the elastic element (4), the solenoid (5), and the braking element (61, 62) are incorporated, being attached, for example screwed, to the fixed part (3) of the motor.

7. The braking device for an electric motor according to claim 6, **characterised in that** the fixed body (11) is a circular casing installed laterally on the motor, fixed to the fixed part (3) surrounding the mobile part (2), such that it does not increase the length of the motor, and to which the solenoid (5) and other elements of the device are radially coupled.

8. The braking device for an electric motor according to claims 1, 2, and 4, **characterised in that** the elastic element (4) is an expansion spring integrated in the solenoid (5) and the braking element is a stop (61) incorporated directly at the end of the piston (5a) of the solenoid (5).

9. The braking device for an electric motor according to claim 8, **characterised in that** the pull solenoid (5) is installed such that when it is not under voltage, the expansion spring or elastic element (4) expands and exerts a pushing force on the piston (5a) which in turn is transmitted, through the braking stop (61), to the mobile part (2) of the motor, braking the rotation thereof, and when the solenoid (5) is under voltage, it pulls the piston (5a), compressing the elastic element (4), releasing the braking stop (61).

10. The braking device for an electric motor according to claims 1, 2, and 4, **characterised in that** the elastic element (4) is a compression spring integrated in the push solenoid (5) and the braking element is a stop (61) connected to the piston (5a) of the solenoid (5) through a connecting rod (7).

11. The braking device for an electric motor according to claim 10, **characterised in that** the solenoid (5) is installed such that when it is not under voltage, the spring or elastic element (4) is compressed and pulls the piston (5a) which, through the connecting rod (7), converts the movement into a pushing movement on the braking stop (61) which, in this case, is incorporated separately from the piston (5a), such that it is displaced in the opposite direction with respect to the piston (5a), pressing on the mobile part (2) and braking the rotation thereof, and when the solenoid (5) is under voltage, it pushes the piston (5a), in turn decompressing the elastic element (4) and, through the connecting rod (7), it causes the displacement of the braking stop (61) in the reverse direction, releasing the mobile part (2).

12. The braking device for an electric motor according to claims 1, 5, and 6, **characterised in that** the braking element of the device consists of a semicircular arc (62) which is attached to the fixed body (11) by means of a articulated attachment or rotation shaft (12) surrounding a portion of the mobile part (2) and the elastic element (4) is an expansion spring attached to the fixed body (11), independently of the piston (5a) of the solenoid (5) such that it puts pressure on the arc (62) through a pressure part provided at an end of the spring.

13. The braking device for an electric motor according to claim 12, **characterised in that** the braking arc (62) is connected to the piston (5a) of the solenoid (5) through an articulated part (8) such that, with the solenoid (5) at rest and not under voltage, the elastic element (4) exerts force on the braking arc (62) and the latter exerts force on the mobile part (2), and with the solenoid (5) in the active position and under voltage, the piston (5a) pulls the braking arc (62), releasing the mobile part (2).

14. The braking device for an electric motor according to claims 11 and 12, **characterised in that** the elastic element (4) is a spring incorporated in a tubular body (9) in which a regulating screw (10) has been provided at its outer end, to regulate the force that said spring (4) exerts on the braking arc (62).

15. The braking device for an electric motor according to claims 1, 5, and 6, **characterised in that** the braking element consist of two semicircular arcs (62) incorporated symmetrically such that they surround the mobile part (2) on opposite sides, attached to the fixed body (11) at one end, on the side opposite the position of the solenoid (5), to a rotation shaft (12), and attached to one another by means of an elastic element in the form of a compression spring (4), such that the force of said spring (4) determines the closing of the arcs (62) around the mobile part (2) and, accordingly, the braking thereof, and on the diametrically opposite side, they are connected to the piston (5a) of the solenoid (5) such that the displacement of said piston (5a) upon activating the voltage of the solenoid (5) causes the separation of both arcs (62) and, accordingly, the release of the mobile part (2).

16. The braking device for an electric motor according to any of the preceding claims, **characterised in that** it comprises emergency brake unlocking means (13) which release the action of the braking element (61, 62) on the mobile part (2) without the need for voltage in the solenoid (5).

17. The braking device for an electric motor according to claim 16, **characterised in that** it comprises a mechanical-manual actuation mechanism (13) as emergency unlocking means.

18. The braking device for an electric motor according to claims 6 and 17, **characterised in that** the mechanism consists of a handle (13) associated with the piston (5a) of the solenoid (5) at one end and with a point of the fixed body (11) in the form of a lever (13a) which, when pressed by the opposite end, releases the mobile part (2) from the action of the braking element (61, 62) caused on same by the elastic element (4).

19. The braking device for an electric motor according to any of the preceding claims, **characterised in that** it comprises emergency brake unlocking means (14) which release the action of the braking element (61, 62) on the mobile part (2) comprising a push-button/switch (14), powered by an electrical system parallel to the main system by means of batteries (14a) and/or connection to the grid (14b) connected to the solenoid (5) so as to switch it on/off to unlock the braking system.
